**Europäisches Patentamt**

**European Patent Office**

**Office européen des brevets**

(19)

(11) Veröffentlichungsnummer: **0 412 055 A2**

## (12) EUROPÄISCHE PATENTANMELDUNG

(21) Anmeldenummer: **90810573.7**

(22) Anmeldetag: **27.07.90**

(51) Int. Cl.5: **B29C 43/00**, B29C 43/52, B29C 67/16, //B29K63:00

(30) Priorität: **03.08.89 CH 2881/89**

(43) Veröffentlichungstag der Anmeldung:
**06.02.91 Patentblatt 91/06**

(84) Benannte Vertragsstaaten:
**DE ES FR GB IT NL SE**

(71) Anmelder: **CIBA-GEIGY AG**
**Klybeckstrasse 141**
**CH-4002 Basel(CH)**

(84) **ES**

Anmelder: **CIBA-GEIGY GmbH**
**Oeflinger Strasse 44**
**D-7867 Wehr/Baden(DE)**

(84) **DE**

(72) Erfinder: **Fuhrmann, Udo**
**Alemannenweg 3**
**D-7880 Bad Säckingen(DE)**
Erfinder: **Schwab, Heinz, Dr.**
**Drosselweg 21**
**D-7867 Wehr(DE)**

(54) **Verfahren zur Herstellung von Blockmaterial.**

(57) Verfahren zur Herstellung von Blockmaterial mit einem hohen Füllstoffgehalt durch Verpressen einer gefüllten Reaktionsharzmasse, dadurch gekennzeichnet, dass man eine trockene bis leicht feuchte rieselfähige, mehr als 30 Gew.-% Füllstoffe, bezogen auf die Reaktionsharzmasse, enthaltende härtbare, als Einkomponentensystem vorliegende Reaktionsharzmasse direkt oder in einer zu einem sogenannten Grünling vorgepressten Form in einem Mikrowellen-, Induktions- oder Hochfrequenzofen auf eine Temperatur von 70 bis 150°C erhitzt, wobei beim Erhitzen in einem Induktions- oder Hochfrequenzofen die Reaktionsharzmasse vorzugsweise zusätzlich eine ausreichende Menge einer dielektrische Verluste aufweisenden Substanz enthält, die heisse Reaktionsharzmasse oder den Grünling in eine auf eine Temperatur von 70 bis 150°C vorgeheizte Pressform eingibt, verpresst und aushärtet.

EP 0 412 055 A2

## VERFAHREN ZUR HERSTELLUNG VON BLOCKMATERIAL

Die vorliegende Erfindung betrifft ein Verfahren zur Herstellung von Blockmaterial durch Verpressen einer gefüllten, mittels Mikrowellen-, Induktions- oder Hochfrequenzofen vorgewärmten Reaktionsharzmasse und die nach diesem Verfahren erhaltenen Blockmaterialien.

Blockmaterialien aus Polyurethanen sind bekannt und werden hergestellt, indem man eine härtbare gefüllte Polyurethanharzmasse vergiesst und zu einem Block aushärtet. Wie aus Modern Plastic International, March 1989, Seite 57, und European Plastics News, November 1983, Seite 27, hervorgeht, können solche Blockmaterialien unter anderem als Werkzeugharze, beispielsweise für den Modellbau, eingesetzt werden, d.h., sie können beispielsweise mit Holzbearbeitungswerkzeugen bearbeitet werden, und die durch Fräsen, Bohren oder Hobeln anfallenden Späne gleichen Holzspänen und es entwickelt sich beim Fräsen praktisch kein Staub. Die durch Vergiessen hergestellten Blockmaterialien weisen zwecks einer guten Giessbarkeit der Polyurethanharzmasse nur relativ geringe Füllstoffgehalte auf.

Es wurde nun gefunden, dass man aus festen, hochgefüllten Reaktionsharzmassen, wie beispielsweise härtbaren hochgefüllten Epoxidharzmassen, Blockmaterialien mit einer spanenden Verarbeitung erhalten kann, wenn man sie verpresst und die Pressmassen vor dem Verpressen in einem Mikrowellen-, Induktions- oder Hochfrequenzofen auf einen bestimmten Temperaturbereich erhitzt.

Die erfindungsgemäss hergestellten Blockmaterialien zeichnen sich gegenüber denen aus vergossenen Polyurethanen vorteil haft durch einen geringeren Wärmeausdehnungskoeffizienten aus. Ausserdem werden aus den erfindungsgemäss einzusetzenden Pressmassen, sofern sie frei von Hohlfüllstoffen sind, geschlossenzellige Blockmaterialien mit vollständig geschlossener Oberfläche erhalten, so dass sich eine Versiegelung der Oberfläche durch beispielsweise eine Lackierung erübrigt.

Gegenstand der Erfindung ist somit ein Verfahren zur Herstellung von Blockmaterial mit einem hohen Füllstoffgehalt durch Verpressen einer gefüllten Reaktionsharzmasse, dadurch gekennzeichnet, dass man eine trockene bis leicht feuchte rieselfähige, mehr als 30 Gew.-% Füllstoffe, bezogen auf die Reaktionsharzmasse, enthaltende härtbare, als Einkomponentensystem vorliegende Reaktionsharzmasse direkt oder in einer zu einem sogenannten Grünling vorgepressten Form in einem Mikrowellen-, Induktions- oder Hochfrequenzofen auf eine Temperatur von 70 bis 150°C erhitzt, die heisse Reaktionsharzmasse oder den Grünling in eine auf eine Temperatur von 70 bis 150°C vorgeheizte Pressform eingibt, verpresst und aushärtet.

Als Einkomponentensystem vorliegende Reaktionsharzmassen können beim erfindungsgemässen Verfahren im allgemeinen solche eingesetzt werden, die in bekannter Weise nach dem Trockenmisch- oder Schmelzmischverfahren hergestellt worden sind.

Beim Trockenmischverfahren werden die einzelnen Komponenten entweder zunächst getrennt gemahlen und anschliessend, nachdem sie die entsprechende Kornfeinheit besitzen, durch einen Mischvorgang homogenisiert, oder gleich zusammengemischt und während des Mahlprozesses gemeinsam zerkleinert und homogenisiert. In einem auf diese Weise hergestellten Pulvergemisch liegen die einzelnen Komponenten, wie Harz, Härtungsmittel oder Härtungskatalysator, Füllstoff, Farbstoff und andere Additive, als diskrete Partikel vor. Beim Schmelzmischverfahren werden die im wesentlichen festen Komponenten in einer Mischapparatur, zum Beispiel einem Henschel-Mischer, trocken vorgemischt und danach aufgeschmolzen, beispielsweise in einem Extruder oder mit Hilfe eines Zweiwalzenwerkes, wobei die festen und nichtschmelzbaren Mischungskomponenten sehr intensiv mit den aufschmelzenden und den in dieser Schmelze gelösten Komponenten der Mischung benetzt werden. Nach dem Abkühlen der Schmelze wird diese gemahlen und gegebenenfalls gesiebt. Im Einzelkorn dieser Pulverformulierung liegt sowohl im Innern als auch an der Oberfläche eine vollkommen homogene Mischung in der ursprünglich vorgelegten Konzentration vor.

Vorzugsweise verwendet man für das erfindungsgemässe Verfahren als Reaktionsharzmasse ein rieselfähiges Granulat bestehend aus einem Agglomerat von feinteiligen anorganischen oder organischen Füllstoffteilchen, welche ein härtbares Gemisch als Einkomponentensystem aufgedüst enthalten, wobei die Mischungskomponenten in homogener Verteilung auf den Füllstoffteilchen vorliegen. Ein solches Granulat wird erhalten, indem man beispielsweise in einem Wirbelbett einen feinteiligen anorganischen oder organischen Füllstoff allein oder zusammen mit einer festen Komponente eines härtbaren Gemisches oder einem Teil davon vorlegt, aufwirbelt und dann ein härtbares Gemisch, die übrigen Bestandteile oder den restlichen Teil des härtbaren Gemisches als Einkomponentensystem, als Flüssigkeit oder als Suspension, aufdüst.

Das Aufdüsen des härtbaren Gemisches auf die organischen oder anorganischen Füllstoffe kann in jeder Wirbelbettanlage vorgenommen werden, wie beispielsweise in einem Wirbelschichtgranulator oder Zerstäubungs-Wirbelbettgranulator. Die Arbeitsweise solcher Apparaturen ist bekannt. Wirbelbettanlagen werden beispielsweise zum Trocknen von Lösungen, bei der Rückgewinnung von Feststoffen aus Lösungen, zum Trocknen und Agglomerieren fester Stoffe sowie zum Beschichten von Gegenständen oder festen Partikeln mit anderen Materialien eingesetzt (s. "Anlagen-Technik", CAV Januar 1973).

Die Herstellung der Granulate kann im allgemeinen sowohl bei Raumtemperatur als auch bei erhöhter Temperatur, d.h. bis zu etwa 100°C, vorgenommen werden und richtet sich einerseits nach der Reaktivität des härtbaren Gemisches und ist andererseits von der Bedingung abhängig, ab welcher Temperatur unterhalb von 50°C mindestens eine Mischungskomponente flüssig ist. Vorzugsweise wird das Aufdüsen im Temperaturbereich von 25 bis 70°C durchgeführt. Die Menge des härtbaren Gemisches, die innerhalb einer bestimmten Zeit in das Wirbelbett eingedüst wird, die sogenannte Eindüsmenge, kann in einem weiten Bereich schwanken und ist unter anderem von der maschinellen Beschaffenheit und von der angewandten Verfahrenstemperatur abhängig. Beispielsweise beträgt bei Pilotansätzen bis etwa 5 kg die Eindüsmenge im allgemeinen zwischen 10 g bis 100 g pro Minute. Bei Produktionsansätzen liegt die Eindüsmenge höher. Vorzugsweise verwendet man für das Aufdüsen eine Reaktionsharzmasse in solchen Mengen, dass die Granulate mehr als 50 Gew.-%, insbesondere mehr als 60 Gew.-%, Füllstoffe enthalten.

Als Füllstoffe können im Prinzip alle Arten von Füllstoffen, wie beispielsweise faserförmige, körnige oder pulverförmige Füllstoffe, verwendet werden.

Für die erfindungsgemäss zu verwendenden Reaktionsharzmassen sind als organische Füllstoffe beispielsweise natürliches oder synthetisches polymeres Material, wie Cellulose, vorzugsweise Baumwollfasern oder Holzmehl, gesättigte Polyester, Polyamide oder Melaminharze, geeignet.

Als anorganische Füllstoffe eignet sich beispielsweise Quarzpulver, Glimmer, Talkum, Asbest, Schiefermehl, Kaolin, Wollastonit, Kreidepulver, Dolomit, Magnesiumcarbonat, Gips, Schwerspat, Aluminiumoxid, Bentone, Kieselsäureaerosol, Lithopone, Titandioxid, Russ, Kohlefasern, Graphit, Metallpulver, insbesondere Aluminiumpulver, Metalloxide, Glaspulver, Glaskugeln, Glasfasern, Zinksulfid, Siliciumcarbid, Cristobalit oder eine Mischung von Füllstoffen. Bevorzugt enthalten die erfindungsgemäss zu verwendenden Reaktionsharzmassen mineralische Füllstoffe, wie vorzugsweise Quarzpulver, insbesondere Quarzgutmehl, Glimmer, Schiefermehl, Kaolin, Wollastonit, Gips, Schwerspat, Aluminiumoxid, Aluminiumhydroxid, Magnesiumhydroxid, Talk, Kieselsäure oder Bentonite.

Die erfindungsgemäss zu verwendenden Reaktionsharzmassen können auch natürliche oder synthetische Hohlfüllstoffe, wie beispielsweise Microballoons, enthalten.

Die Füllstoffe können ferner mit Haftvermittlern behandelt sein, die die Bindung des Polymers an die Füllstoffpartikel fördern. Bevorzugt verwendet man ausserdem solche feinteiligen Füllstoffe, die eine hohe Oberflächenaktivität aufweisen, wie beispielsweise die aus dem GB-Patent 1 043 437 bekannten feinteiligen ausgehärteten Melamin-Formaldehyd-Kondensationsprodukte.

Als härtbare Gemische, die in den erfindungsgemäss zu verwendenden Reaktionsharzmassen enthalten sind, kommen im allgemeinen solche in Frage, die unter Einwirkung von Licht, Wärme, Härtungsmitteln, Katalysatoren oder Härtungsbeschleunigern während der Verarbeitung zu duroplastischen Endprodukten ausgehärtet werden können. Es handelt sich hierbei im wesentlichen um vernetzbare Kunstharze, die im allgemeinen Vorkondensate, Voraddukte oder ein Gemisch von härtbaren also vernetzbaren Monomeren sind.

Beispielsweise können folgende vernetzbare Kunststoffe als Einkomponentensystem zur erfindungsgemässen Herstellung von Blockmaterial eingesetzt werden:

Phenoplaste aus Aldehyden und gegebenenfalls alkylierten Phenolen, die im basischen Medium hergestellt werden, Aminoplaste, wie z.B. Harnstoffformaldehydharze oder Melaminformaldehydharze, Alkydharze und ölmodifizierte Alkydharze, ungesättigte Polyester, besonders auf der Basis von Maleinsäure, Epoxidharze, besonders auf Bisphenol A-Basis, Polyurethane und ungesättigte Polyimide, besonders auf Basis gegebenenfalls C-alkylierter Bismaleinimide.

Vorzugsweise verwendet man als Einkomponentensystem ein härtbares Epoxidharzgemisch.

Als Epoxidharze kommen vor allem solche mit durchschnittlich mehr als einer an ein Heteroatom (z.B. Schwefel, vorzugsweise Sauerstoff oder Stickstoff) gebundenen Glycidylgruppe, $\beta$-Methylglycidylgruppe oder 2,3-Epoxycyclopentylgruppe in Frage; genannt seien insbesondere Bis-(2,3-epoxycyclopentyl)ether; Di- bzw. Polyglycidylether von mehrwertigen Alkoholen, wie 1,4-Butandiol, oder Polyalkylenglykolen, wie Polypropylenglykole; Di- oder Polyglycidylether von cycloaliphatischen Polyolen, wie 2,2-Bis-(3-hydroxycyclohexyl)-propan; Di- oder Polyglycidylether von mehrwertigen Phenolen, wie Resorcin, Bis-(p-hydroxyphenyl)-methan, 2,2-Bis-(p-hydroxyphenyl)-propan (= Diomethan), 2,2-Bis-(4'-hydroxy-3',5'-dibromphenyl)-propan, 1,1,2,2-Tetrakis-(p-hydroxyphenyl)-ethan, oder unter sauren Bedingungen erhaltenen Kondensationsprodukten von Phenolen mit Formaldehyd, wie Phenol-Novolake und Kresol-Novolake; Di- bzw.Poly-(β-methylglycidyl)-ether der oben angeführten mehrwertigen Alkohole oder mehrwertigen Phenole; Polyglycidylester von mehrwertigen Car- bonsäuren, wie Phthalsäure, Terephthalsäure, $\Delta^4$- Tetrahydrophthalsäure und Hexahydrophthalsäure; N-Glycidylderivate von Aminen, Amiden und heterocyclischen Stickstoffbasen, wie N,N-Diglycidylanilin, N,N-Diglycidyltoluidin, N,N,N´,N´- Tetraglycidyl-bis-(p-aminophenyl)-methan; Triglycidylisocyanurat; N,N´-Diglycidylethylenharnstoff; N,N´-Diglycidyl-5,5-dimethylhydantoin, N,N´- Diglycidyl-5-isopropyl-hydantoin; N,N´-Diglycidyl- 5,5-dimethyl-6-isopropyl-5,6-dihydro-uracil.

Ferner sind auch vorreagierte Addukte solcher Epoxidharze mit Härtern als Epoxidharze geeignet.

Als Härter für Epoxidharze kommen saure oder basische Verbindungen in Frage. Als geeignete Härter seien z.B. genannt: Amine oder Amide, wie aliphatische, cycloaliphatische oder aromatische, primäre, sekundäre und tertiäre Amine, wie z.B. Monoethanolamin, Ethylendiamin, Hexamethylendi- amin, Trimethylhexamethylendiamin, Diethylentria- min, Triethylentetramin, Tetraethylenpentamin, N,N-Dimethylpropylendiamin-1,3, N,N- Diethylpropylendiamin-1,3, 2,2-Bis-(4´-aminocyclohexyl)-propan, 3,5,5-Trimethyl-3-(aminomethyl)- cyclohexylamin ("Isophorondiamin"), Mannichbasen, wie 2,4,6-Tris-(dimethylaminomethyl)-phenol; m-Phenylendiamin, p-Phenylendiamin, Bis-(4-aminophenyl)-methan, Bis-(4-aminophenyl)-sulfon, m- Xylylendiamin; Addukte von Acrylnitril oder Monoepoxiden, wie Ethylenoxid oder Propylenoxid, an Polyalkylenpolyamine, wie Diethylentriamin oder Triethylentetramin; Addukte aus Polyaminen, wie Diethylentriamin oder Triethylentetramin, im Ueber- schuss und Polyepoxiden, wie Dimethanpolyglyci- dylethern; Ketimine, z.B. aus Aceton oder Methylethylketon und Bis-(p-aminophenyl)-methan; Addukte aus Monophenolen oder Polyphenolen und Polyamiden; Polyamide, insbesondere solche aus aliphatischen Polyaminen, wie Diethylentriamin oder Triethylentetramin, und di-oder trimerisierten ungesättigten Fettsäuren, wie dimerisierte Leinölfettsäure (VERSAMID®); polymere Polysulfide (THIOKOL®); Dicyandiamid (1-Cyanoguanidin), Anilin-Formaldehydharze; mehrwertige Phenole, z.B. Resorcin, 2,2-Bis-(4-hydroxyphenyl)-propan oder Phenol- Formaldehyd-Harze; Bortrifluorid und seine Komplexe mit organischen Verbindungen, wie BF$_3$-Ether-Komplexe und BF$_3$-Amin-Komplexe, z.B.BF$_3$-Monoethylamin-Komplex; Acetoacetanilid- BF$_3$-Komplex; Phosphorsäure; Triphenylphosphit, mehrbasische Carbonsäuren und ihre Anhydride, z.B. Phthalsäure anhydrid, $\Delta^4$-Tetrahydrophthalsäu- reanhydrid, Hexahydrophthalsäureanhydrid, 4-Me- thylhexahydrophthalsäureanhydrid, 3,6- Endomethylen-$\Delta^4$-tetrahydrophthalsäureanhydrid,

4-Methyl-3,6-endomethylen-$\Delta^4$- tetrahydrophthalsäureanhydrid ( = Methylnadicanhydrid), 3,4,4,5,6,7-Hexachlor-3,5- endomethylen-$\Delta^4$-tetrahydrophthalsäureanhydrid, Bernsteinsäureanhydrid, Adipinsäureanhydrid, Tri- methyladipinsäureanhydrid, Azelainsäureanhydrid, Sebacinsäureanhydrid, Maleinsäureanhydrid, De- cenylbernsteinsäureanhydrid; Pyromellitsäure- dianhydrid oder Gemische solcher Anhydride.

Ferner sind auch hydroxylgruppenhaltige Addukte, wie sie durch Umsetzung von Bisphenolen mit Formaldehyd oder einem Bisphenoldiglycidylether erhalten werden, als Epoxidharzhärter geeignet.

Als Härtungsbeschleuniger können ebenfalls an sich bekannte Verbindungen verwendet werden. Als Beispiele seien genannt: Komplexe von Aminen, besonders tertiären Aminen, wie Monomethyldiethylamin, Trimethylamin und Octyldimethylamin, mit Bortrifluorid oder Bortrichlorid, tertiäre Amine, wie Benzyldimethylamin, Tris- (dimethylaminomethyl)-phenol, Hexamethylentetramin oder 1,6-Bis-(dimethylamino)-hexan; Harnstoffderivate, wie N-4-Chlorphenyl-N´,N´-dimethylharnstoff (Monuron), N-3-Chlor-4-methylphenyl-N´,N´-di- methylharnstoff (Chlortoluron), N-(2-Hydroxyphe- nyl)-N´,N´-dimethylharnstoff und N-(2-Hydroxy-4-nitrophenyl)-N´,N´-dimethylharnstoff, gegebenenfalls substituierte Imidazole, wie Imidazol, Benzimidazol, 1-Methylimidazol, 3-Methylimidazol, 2-Ethyl-4-methylimidazol, 2-Vinylimidazol, 2-Phenylimidazol, 2- Phenyl-4-methylimidazol, 1-(2,6-Di-chlorbenzoyl)-2- phenylimidazol und 1-(2,4,6-Trimethylbenzoyl)-2- phenylimidazol sowie Phosphine.

Geeignete Härter für Polyisocyanate sind z.B. flüssige, verzweigte Polyester, lineare Polyester, Polyacetale, Polyether und Polythioether.

Geeignete Comonomere z.B. für ungesättigte Polyimide, sind beispielsweise ethylenisch ungesättigte Verbindungen wie Styrol, Acrylsäureester oder Methacrylsäureester.

Ferner können in den härtbaren Gemischen noch die üblichen Additive enthalten sein, wie bei- spielsweise Pigmente, Flammschutzmittel, Antioxid- antien, optische Aufheller, Weichmacher oder Stabilisatoren gegen licht- oder wärmeinduzierten Abbau.

Erhitzt man die Reaktionsharzmasse direkt in einem Mikrowellen-, Induktions- oder Hochfrequenzofen, so gibt man die Reaktionsharzmasse zu diesem Zweck entweder in eine offene Form oder man füllt sie in Kunststoffbehälter oder Kunststoffbeutel, wie beispielsweise Beutel aus Polyethylen, ab. Es ist auch möglich, die rieselfähige Reaktionsharzmasse vor dem Erhitzen in den genannten Oefen vorzuformen, indem man beispielsweise die Reaktionsharzmasse, in einer Aluminiumform unter Anwendung eines Druckes von etwa 1 bis 100 bar, vorzugsweise 5 bis 100 bar, zu einem sogenannten Grünling verpresst bzw. vorformt.

Mikrowellen-, Induktions- und Hochfrequenzöfen sind bekannt und im Handel erhältlich. Die Reaktionsharzmassen werden in diesen Oefen in üblicher Weise rasch auf eine Temperatur zwischen 70 bis 150°C, vorzugsweise zwischen 80 und 130°C, erhitzt. Vorzugsweise verwendet man zum Erhitzen der Reaktionsharzmasse einen Mikrowellenofen.

Verwendet man zum Erhitzen der Reaktionsharzmasse einen Induktions- oder Hochfrequenzofen, so enthält die Reaktionsharzmasse vorzugsweise zusätzlich eine ausreichende Menge einer dielektrische Verluste aufweisende Substanz. Damit wird er reicht, dass die Reaktionsharzmasse im Induktions- oder Hochfrequenzofen rascher erhitzt wird. Als dielektrische Verluste aufweisende Substanz verwendet man vorteilhaft Carbonyleisen oder Metallflitter. Im allgemeinen werden die dielektrische Verluste aufweisende Substanzen in Mengen von etwa 1 bis 20 Gew.-%, bezogen auf die gefüllte Reaktionsharzmasse, eingesetzt.

Nach dem Erhitzen der Reaktionsharzmasse in einem Mikrowellen-, Induktions- oder Hochfrequenzofen gibt man die gegebenenfalls noch rieselfähige oder als Grünling vorliegende Reaktionsharzmasse heiss in eine auf 70 bis 150°C, vorzugsweise 80 bis 130°C, vorgeheizte Pressform, wobei diese vorzugsweise die etwa gleiche Temperatur wie die erhitzte Reaktionsharzmasse aufweist.

In der Presse wird die Reaktionsharzmasse in üblicher Weise verpresst und ausgehärtet, d.h., im allgemeinen wendet man Drücke von etwa 1 bis etwa 100 bar, vorzugsweise von 5 bis 100 bar, an. Es ist auch möglich, den Pressling, sofern es seine Formstabilität zulässt, bereits vor der endgültigen Aushärtung der Presse zu entnehmen und in einem Ofen oder in einer Wärmekammer nachzuhärten.

Das nach dem erfindungsgemässen Verfahren erhaltene Blockmaterial zeichnet sich vor allem durch einen geringen linearen thermischen Ausdehnungskoeffizienten aus. Hiermit hergestellte Werkstücke sind infolgedessen über einen weiten Temperaturbereich ausreichend dimensionsstabil.

Gegenstand ist somit auch das nach dem erfindungsgemässen Verfahren erhaltene Blockmaterial mit einem Füllstoffgehalt von mehr als 30 Gew.-%, vorzugsweise mehr als 50 Gew.-%, bezogen auf das Blockmaterial.

Das erfindungsgemässe Blockmaterial ist homogen und lunker frei, weist keine Faserstruktur auf und zeichnet sich durch eine hohe Kantenfestigkeit aus. Das erfindungsgemässe Blockmaterial hat gute Bearbeitungseigenschaften, ist maschinell oder von Hand bearbeitbar und entwickelt bei der Bearbeitung mit normalen Holzbearbeitungswerkzeugen, beispielsweise beim Hobeln, Fräsen, Bohren, Drehen oder Sägen, praktisch keinen Staub.

Das in den folgenden Beispielen eingesetzte Epoxidharzaddukt I und die Härter A und B werden wie folgt erhalten.

## Epoxidharzaddukt I

Durch Umsetzung von 1000 g eines flüssigen Bisphenol A-diglycidylethers mit einem Epoxidgehalt von 5,35 Aequivalenten/kg und einer Viskosität bei 25°C von 13,5 Pa·s mit 100 g 4,4'-Diaminodiphenylmethan erhält man ein harzartiges, sprödes und mahlbares Produkt mit einem Epoxidgehalt von 3,00 Aequivalenten/kg und einem Schmelzpunkt von 72°C.

## Härter A

Ein durch Umsetzung von 650 g Bisphenol A und 320 g Bisphenol A-diglycidylether mit einem Epoxidgehalt von 5,4 Aequivalenten/kg in Gegenwart von 26,5 g 2-Methylimidazol als Katalysator erhältliches hydroxylgruppenhaltiges Produkt mit einem Hydroxylgehalt von 4,3 Aequivalenten/kg.

## Härter B

Ein durch Umsetzung von 497 g Bisphenol A mit 100 g einer 38,5 gew.%-igen methanolischen Formaldehydlösung in 400 g Wasser erhältliches festes hydroxylgruppenhaltiges Produkt mit einem Hydroxylgehalt von 8,25 Aequivalenten/kg.

## Beispiel 1:

In einem Wirbelschichtgranulator (Typ WSG 5 der Fa. Glatt, D-7859 Haltingen) werden 2585 g Talkum (Typ 427 der Fa. Bassermann, D-6800 Mannheim) gemeinsam mit 215 g Calciumcarbonat vorgelegt und in den Wirbelzustand gebracht.

In dieses Wirbelbett wird eine auf 50°C vorgewärmte flüssige Suspension eingedüst. Diese Suspension wird durch Vormischen von 1392,4 g Bisphenol A-diglycidylether mit einem Epoxidäquivalent von 178 und einer Viskosität von 10000 mPa·s, 90,7 g Dicyandiamid und 24,9 g Chlortoluron (3-(3-Chlor-4-methylphenyl)-1,1-dimethylharnstoff) erhalten. Die durchschnittliche Eindüsmenge beträgt 45 g/Minute, so dass nach etwa 34 Minuten mit 99%-iger Ausbeute ein trockenes bis leicht feuchtes, rieselfähiges Granulat erhalten wird. Dieses wird zur besseren Handhabung in 4 Polyethylenbeutel aufgeteilt, welche stufenweise, 1. Stufe auf 80°C und 2. Stufe auf 100°C, mittels Mikrowellen (Typ UP 60, Gerät der Fa. Siemens) erwärmt werden.

Das so vorgewärmte Produkt wird in eine auf 100°C vorgewärmte Aluminiumform (Länge = 21 cm, Breite = 15 cm, Höhe variierbar) geschüttet. Unter- und Oberteil der Aluminiumform sind auf die Tische einer Presse (Typ UP 60 der Maschinenfabrik Lauffer, D-7240 Horb) montiert. Nach dem Einfahren des Stempels wird das Material mit einem Druck von 20 bar komprimiert und in der Form während 6 h vorgehärtet. Die Nachhärtung des entformten Blockes erfolgt in einem Umluftofen während 6 h bei 120°C.

Man erhält einen Block mit folgenden Eigenschaften:

Füllstoffgehalt = 65,0 Gew.-%

Glasumwandlungstemperatur = 134°C

linearer thermischer Ausdehnungskoeffizient (T < Tg) = 24-25·$10^{-6}$/K.

Beispiel 2:

Vor dem Vermischen der festen Reaktionskomponenten werden diese in einem Mixer (Typ MX 32 der Fa. Braun AG, D-Frankfurt/Main) separat zerkleinert. Dann werden 582,1 g Epoxidharzaddukt I, 407,9 g Härter A, 1980 g Talkum (Typ 427) und 330 g Aluminiumfeinschliff (Typ Lack-Schliff 1111 der Eckart-Werke, D-Fürth/Bayern) in einem Henschel-Fluid-Mixer (Typ FM 10 1) bei einer Umdrehungsgeschwindigkeit (U) von 1000 Umdrehungen pro Minute etwa 1 Minute lang vermischt. Das Mischgut wird wie in Beispiel 1 in Polyethylenbeutel abgefüllt und gehärtet.

Man erhält einen Block mit folgenden Eigenschaften:

Füllstoffgehalt = 70,0 Gew.-%

Tg = 85°C

linearer thermischer Ausdehnungskoeffizient (T < Tg) = 22-24·$10^{-6}$/K.

Beispiel 3:

Die festen Reaktionskomponenten werden vor dem Vermischen separat in einer Stiftmühle (Typ Feinprallmühle 160 UPZ der Fa. ALPINE AG, D-Augsburg) gemahlen. Dann werden 815,1 g Epoxidharzaddukt I, 161,7 g Härter A, 224,2 g Härter B, 1980 g Talkum und 330 g Aluminiumfeinschliff im Henschel-Fluid-Mixer bei U = 100 /min etwa 1 Minute intensiv vorhomogenisiert. Diese Vormischung wird in einem Ko-kneter (Typ PR 46-7D der Fa. Buss AG, CH-Basel) im Temperaturbereich von 100 bis 110°C schmelzvermischt. Nach dem Abkühlen des Extradates mittels eines gekühlten Zweiwalzenwerkes werden die dabei entstandenen blättchenartigen Schuppen im Henschel-Fluid-Mixer während 3 Minuten vorgebrochen und dann in der Stiftmühle gemahlen. Das Mischgut wird wie in Beispiel 1 in Polyethylenbeutel abgefüllt, mittels Mikrowellen erwärmt und dann verpresst. Danach wird der Block 10 Stunden in der heissen Form belassen, und nach dem Warmentformen lässt man den Block langsam abkühlen.

Man erhält einen Block mit folgenden Eigenschaften:

Füllstoffgehalt = 63,0 Gew.-%

Tg = 135°C

linearer thermischer Ausdehnungskoeffizient (T < Tg) = 24-26·$10^{-6}$/K.

Beispiel 4:

Es wird die gleiche Mischung wie in Beispiel 3 hergestellt. Nach dem Mahlen der Schuppen in der Stiftmühle wird das Mischgut kalt in die Aluminiumform gegeben und kalt zu einem sogenannten Grünling unter Anwendung eines Druckes von 60 bar verpresst. Der Grünling wird im Mikrowellenofen (Typ MWT 732 der Fa. Bauknecht) während 10 Minuten auf 90 bis 100°C erwärmt, dann in die ebenfalls auf 100°C vorgewärmte Aluminiumform eingelegt und mit einem Druck von 20 bar verpresst. Wie in Beispiel 3 wird der Block 10 Stunden in der heissen Form belassen und dann langsam abgekühlt.

Man erhält einen Block mit folgenden Eigenschaften:

Füllstoffgehalt = 63,0 Gew.-%

Tg = 135°C

linearer thermischer Ausdehnungskoeffizient (T < Tg) = 24-26·$10^{-6}$/K.

**Ansprüche**

1. Verfahren zur Herstellung von Blockmaterial mit einem hohen Füllstoffgehalt durch Verpressen einer gefüllten Reaktionsharzmasse, dadurch gekennzeichnet, dass man eine trockene bis leicht feuchte rieselfähige, mehr als 30 Gew.-% Füllstoffe, bezogen auf die Reaktionsharzmasse, enthaltende härtbare, als Einkomponentensystem vorliegende Reaktionsharzmasse direkt oder in einer zu einem sogenannten Grünling vorgepressten Form in einem Mikrowellen-, Induktions- oder Hochfrequenzofen auf eine Temperatur von 70 bis 150°C erhitzt, die heisse Reaktionsharzmasse oder den Grünling in eine auf eine Temperatur von 70 bis 150°C vorgeheizte Pressform eingibt, verpresst und aushärtet.

2. Verfahren gemäss Anspruch 1, dadurch gekennzeichnet, dass man eine im Trockenmisch- oder Schmelzmischverfahren hergestellte Reaktionsharzmasse einsetzt.

3. Verfahren gemäss Anspruch 1, dadurch gekennzeichnet, dass man ein rieselfähiges Granulat bestehend aus einem Agglomerat von feinteiligen anorganischen oder organischen Füllstoffteilchen, welche ein härtbares Gemisch als Einkomponentensystem aufgedüst enthalten, als Reaktionsharzmasse einsetzt.

4. Verfahren gemäss Anspruch 1, dadurch gekennzeichnet, dass die Reaktionsharzmasse als Füllstoff einen anorganischen Füllstoff enthält.

5. Verfahren gemäss Anspruch 1, dadurch gekennzeichnet, dass die Reaktionsharzmasse als Füllstoff einen mineralischen Füllstoff enthält.

6. Verfahren gemäss Anspruch 1, dadurch gekennzeichnet, dass die Reaktionsharzmasse als Einkomponentensystem ein härtbares Epoxidharzgemisch enthält.

7. Verfahren gemäss Anspruch 1, dadurch gekennzeichnet, dass man die Reaktionsharzmasse in einem Mikrowellenofen erhitzt.

8. Verfahren gemäss Anspruch 1, dadurch gekennzeichnet, dass man die Reaktionsharzmasse in einem Induktions- oder Hochfrequenzofen erhitzt und diese zusätzlich eine ausreichende Menge einer dielektrische Verluste aufweisenden Substanz enthält.

9. Verfahren gemäss Anspruch 8, dadurch gekennzeichnet, dass die Reaktionsharzmasse als dielektrische Verluste erzeugende Substanz Carbonyleisen oder Metallflitter enthält.

10. Verfahren gemäss Anspruch 1, dadurch gekennzeichnet, dass die erhitzte Reaktionsharzmasse und die vorgeheizte Pressform etwa die gleiche Temperatur aufweisen.

11. Das nach dem Verfahren gemäss Anspruch 1 erhaltene Blockmaterial mit einem Füllstoffgehalt von mehr als 30 Gew.-%, bezogen auf das Blockmaterial.